# EUROPÄISCHE PATENTANMELDUNG

(11) **EP 1 482 154 A2**
(43) Veröffentlichungstag der Anmeldung: **01.12.2004**
(21) Anmeldenummer: 04102214.6
(22) Anmeldetag: 19.05.2004
(51) Int. Cl.: F02D 41/06, F02D 41/26

(54) **Schaltungsanordnung und Verfahren zur Steuerung wenigstens einer elektrischen Komponente eines Kraftfahrzeugs**

(30) Priorität: 28.05.2003 US 446321
(71) Anmelder: SIEMENS AKTIENGESELLSCHAFT, 80333 München (DE); Siemens VDO Automotive Corporation, Auburn Hills, Michigan 48326-2980 (US)
(72) Erfinder: Bolz, Stephan, 93102, Pfatter (DE); Hernandez-Distancia, Mauricio Eduardo, 91052, Erlangen (DE); Lugert, Günter, 93055, Regensburg (DE)

(57) **Zusammenfassung**

Schaltungsanordnung (10) zur Steuerung wenigstens einer elektrischen Komponente (SW) eines Kraftfahrzeugs mittels eines dieser Komponente zugeführten Ansteuersignals, wobei die Schaltungsanordnung eine digitale Steuereinheit (MC) umfasst, welche in ihrem Betrieb an einem Ausgang (I01) der digitalen Steuereinheit ein Ausgangssignal zur Vorgabe des Ansteuersignals bereitstellt, wobei die Schaltungsanordnung einen Versorgungsanschluss (Vbat´) zum Anlegen einer Betriebsspannung aufweist, die von einer Stromversorgungseinrichtung des Kraftfahrzeugs bereitgestellt wird, wobei die digitale Steuereinheit ihren Betrieb beginnt, wenn am Versorgungsanschluss eine über einem vorbestimmten Schwellwert liegende Betriebsspannung anliegt, und ihren Betrieb beendet, wenn am Versorgungsanschluss eine unter dem Schwellwert liegende Betriebsspannung anliegt, wobei die Schaltungsanordnung einen mit dem Ausgang der digitalen Steuereinheit verbundenen Schaltungsblock (16) zur Bereitstellung des Ansteuersignals umfasst, wobei der Schaltungsblock im Betrieb der digitalen Steuereinheit das Ansteuersignal basierend auf dem Ausgangssignal der digitalen Steuereinheit bereitstellt und bei Beendigung dieses Betriebs das momentane Ansteuersignal für eine vorbestimmte Zeitspanne aufrecht erhält.

## Beschreibung

### Hintergrund der Erfindung

### Gebiet der Erfindung

Die vorliegende Erfindung betrifft eine Schaltungsanordnung und ein Verfahren zur Steuerung wenigstens einer elektrischen Komponente eines Kraftfahrzeugs. Insbesondere betrifft die Erfindung ein in einem Kraftfahrzeug angeordnetes so genanntes Steuergerät, welches eine Vielzahl von Steuerungsfunktionen erfüllt, die für einen ordnungsgemäßen Betrieb einer Brennkraftmaschine des Kraftfahrzeugs notwendig sind.

### Beschreibung des Stands der Technik

Es sind derartige Steuergeräte bekannt, denen zur Inbetriebnahme über einen Versorgungsanschluss eine Betriebsspannung aus dem 12V-Bordnetz des Kraftfahrzeugs zugeführt wird. Die Steuerfunktionen sind hierbei in einem so genannten Microcontroller implementiert, der typischerweise lediglich eine Spannung von 5V zum Betrieb benötigt. In diesem Fall weist das Steuergerät einen Spannungsregler (DC/DC-Abwärtswandler) auf, um die Bordnetzspannung von 12V auf 5V zu wandeln. Solange die Bordnetzspannung größer als etwa 6V ist, ist der Spannungsregler in der Lage, die für den Betrieb des Microcontrollers erforderliche Spannung an seinem Ausgang bereitzustellen.

Bereits beim Starten der Brennkraftmaschine eines Kraftfahrzeugs sind dieser zugeordnete elektrische Komponenten geeignet anzusteuern. Typischerweise wird das Steuergerät beim Mo torstart über einen Anschluss des Zündschlosses mit der Bordnetzspannung aus einer Starterbatterie des Kraftfahrzeugs versorgt, woraufhin der Spannungsregler im Steuergerät den Microcontroller mit 5V versorgt. Nach einer kurzen Initialisierungsphase nimmt der Microcontroller seinen regulären Betrieb auf und betätigt beispielsweise einen Magnetschalter zum Einschalten(Einrücken und Bestromen) des Anlassers. Bei einer Brennkraftmaschine mit Direkteinspritzung wird gleichzeitig eine Kraftstoffpumpe gestartet, um den für den ersten Einspritzpuls erforderlichen Kraftstoffdruck aufzubauen.

Die Erfüllung von Steuerfunktionen beim Motorstart ist problematisch, da die zum Betrieb des Steuergeräts notwendige Betriebsspannung zu diesem Zeitpunkt noch nicht von einem der Brennkraftmaschine zugeordneten elektrischen Generator bereitgestellt werden kann sondern lediglich durch die Starterbatterie des Kraftfahrzeugs. Das Hochschleppen des Motors bis auf dessen Startdrehzahl durch den Anlasser erfordert eine erhebliche elektrische Leistung, die von der Starterbatterie bereitgestellt werden muss. Besonders hoch ist der vom Anlasser aufgenommene elektrische Strom zu Beginn des Startvorgangs. Der Strom wird in diesem Augenblick lediglich durch den Innenwiderstand der Starterbatterie sowie die Widerstände der Zuleitungen und der Anlasserwicklung begrenzt. Eine den Strom verringernde Gegen-EMK (Elektromotorische Kraft) wird erst mit dem Hochlaufen des Anlassers erzeugt. Aufgrund des von Null verschiedenen Innenwiderstands der Starterbatterie kommt es daher beim Motorstart zu einem starken Absinken der Spannung an den Batterieklemmen.

Dieser vorübergehende Abfall der Batteriespannung kann dazu führen, dass die dem Steuergerät zugeführte Betriebsspannung vorübergehend nicht ausreicht, um die Steuerfunktionen zuver lässig zu erfüllen. Dieses Problem wird insbesondere durch eine altersbedingte Schwächung der Starterbatterie und auch bei tiefen Temperaturen verschärft. Es hat sich herausgestellt, dass die Batteriespannung (nominal 12V) beim Motorstart z. B. für eine Dauer von etwa 100ms auf Werte von etwa 3V abfallen kann. In diesem Fall reicht die dem Steuergerät zugeführte Betriebsspannung (gegebenenfalls abwärtsgewandelt) nicht mehr aus, um deren zuverlässigen Betrieb, insbesondere den Betrieb eines gegebenenfalls vorgesehenen Microcontrollers zu gewährleisten.

### Abriss der Erfindung

Es ist daher eine Aufgabe der vorliegenden Erfindung, eine Schaltungsanordnung und ein Verfahren zur Steuerung wenigstens einer elektrischen Komponente eines Kraftfahrzeugs bereitzustellen, bei welchen auch bei vorübergehendem Abfall einer Betriebsspannung ein Ansteuersignal für die elektrische Komponente zuverlässig bereitgestellt werden kann.

Diese Aufgabe wird gemäß der Erfindung im Wesentlichen dadurch gelöst, dass im Falle einer unter einen Schwellwert sinkenden Betriebsspannung das momentane Ansteuersignal für eine vorbestimmte Zeitspanne aufrechterhalten wird. Damit ist es möglich, den vorübergehenden Ausfall von Steuerfunktionen zu überbrücken.

Insbesondere wird durch die Erfindung bereitgestellt: Eine Schaltungsanordnung zur Steuerung wenigstens einer elektrischen Komponente eines Kraftfahrzeugs mittels eines dieser Komponente zugeführten Ansteuersignals, wobei die Schaltungsanordnung eine digitale Steuereinheit umfasst, welche in ihrem Betrieb an einem Ausgang der digitalen Steuereinheit ein Ausgangssignal zur Vorgabe des Ansteuersignals bereitstellt, wobei die Schaltungsanordnung einen Versorgungsanschluss zum Anlegen einer Betriebsspannung aufweist, die von einer Stromversorgungseinrichtung des Kraftfahrzeugs bereitgestellt wird, wobei die digitale Steuereinheit ihren Betrieb beginnt, wenn am Versorgungsanschluss eine über einem vorbestimmten Schwellwert liegende Betriebsspannung anliegt, und ihren Betrieb beendet, wenn am Versorgungsanschluss eine unter dem Schwellwert liegende Betriebsspannung anliegt, wobei die Schaltungsanordnung einen mit dem Ausgang der digitalen Steuereinheit verbundenen Schaltungsblock zur Bereitstellung des Ansteuersignals umfasst, wobei der Schaltungsblock im Betrieb der digitalen Steuereinheit das Ansteuersignal basierend auf dem Ausgangssignal der digitalen Steuereinheit bereitstellt, und wobei der Schaltungsblock bei Beendigung des Betriebs der digitalen Steuereinheit das momentane Ansteuersignal für eine vorbestimmte Zeitspanne aufrecht erhält, und ein Verfahren zur Steuerung wenigstens einer elektrischen Komponente eines Kraftfahrzeugs mittels eines dieser Komponente zugeführten Ansteuersignals, umfassend:
- Betrieb einer digitalen Steuereinheit zur Vorgabe des Ansteuersignals durch ein Ausgangssignal der digitalen Steuereinheit, welche ihren Betrieb beginnt, wenn von einer Stromversorgungseinrichtung des Kraftfahrzeugs eine über einem vorbestimmten Schwellwert liegende Betriebsspannung bereitgestellt wird, und ihren Betrieb beendet, wenn eine unter dem Schwellwert liegende Betriebsspannung bereitgestellt wird,
- Eingabe des Ausgangssignals zu einem Schaltungsblock, und
- Bereitstellung des Ansteuersignals mittels des Schaltungsblocks, welcher im Betrieb der digitalen Steuereinheit das Ansteuersignal basierend auf dem Ausgangssignal der digitalen Steuereinheit bereitstellt und bei Beendigung des Betriebs der digitalen Steuereinheit das momentane Ansteuersignal für eine vorbestimmte Zeitspanne aufrechterhält.

In einer bevorzugten Ausführungsform ist die angesteuerte elektrische Komponente eine derjenigen mit dem Betrieb einer Brennkraftmaschine verbundenen Komponenten, die typischerweise bei einem Motorstart angesteuert werden müssen. In einer Ausführungsform handelt es sich um einen Magnetaktuator, insbesondere einen Magnetschalter eines Anlassers für eine Brennkraftmaschine, eine Kraftstoffpumpe oder ein Relais, insbesondere ein Relais zum Einschalten eines elektrischen Verbrauchers einer vergleichsweise großen elektrischen Leistung. Dies soll bedeuten, dass beim Einschalten eines solchen Verbrauchers eine Belastung des Bordnetzes ein Ausmaß besitzt, welche die Bordnetzspannung erheblich absinken lässt, beispielsweise um mindestens 50% absinken lässt, insbesondere auf einen Wert, der eine ordnungsgemäße Vorgabe des Ansteuersignals durch die digitale Steuereinheit nicht mehr gewährleistet.

Ein weiteres Beispiel einer elektrischen Komponente, für die die Ansteuerung vorgesehen sein kann, ist eine elektrohydraulische Hochdruckventilanordnung (z. B. für einen Diesel-Einspritzmotor). In diesem Anwendungsfall ist ein sofortiges Betätigen der Ventile bei Erreichen der Startdrehzahl wünschenswert.

In einer Ausführungsform ist als das Ansteuersignal ein binäres Signal zum Einschalten und Ausschalten der elektrischen Komponente vorgesehen.

Bevorzugt steuert die digitale Steuereinheit einen Großteil, insbesondere im Wesentlichen sämtliche der zum Starten und zum Betrieb einer Brennkraftmaschine im Kraftfahrzeug notwendigen elektrischen Komponenten. Zu diesem Zweck können der digitalen Steuereinheit auch eine Vielzahl von Sensorsignalen eingegeben werden, anhand derer die Komponenten gesteuert oder geregelt werden. Um diese in der Praxis dann sehr komplexen Steuerungsfunktionen zu erfüllen, ist es vorteilhaft, wenn die digitale Steuereinheit programmgesteuert funktioniert, insbesondere als Microcontroller ausgebildet ist. Falls zum Betrieb der digitalen Steuereinheit eine Spannung erforderlich ist, die verschieden von der Bordnetzspannung des Kraftfahrzeugs ist, so umfasst die Schaltungsanordnung bevorzugt einen DC/DC-Wandler zur Bereitstellung dieser Spannung.

Insbesondere bei einer programmgesteuerten digitalen Steuereinheit führt ein Überschreiten des Schwellwerts durch die Betriebsspannung nicht sofort zu einem Steuerungsbetrieb der Steuereinheit. Vielmehr wird eine solche Steuereinheit dann zunächst initialisiert. In einer bevorzugten Ausführungsform, bei welcher die digitale Steuereinheit ihren Betrieb erst am Ende einer Initialisierungsphase beginnt, ist daher vorgesehen, dass die Dauer der vorbestimmten Zeitspanne größer als die Dauer der Initialisierungsphase ist, insbesondere größer als die Summe aus der Dauer der Initialisierungsphase und der beim Motorstart typischerweise sich ergebenden Dauer, für welche die Betriebsspannung unter dem Schwellwert liegt. In der Praxis kann die Dauer der vorbestimmten Zeitspanne beispielsweise etwa das zweifache bis fünffache der Dauer der Initialisierungsphase betragen, um den vorübergehenden Ausfall der Steuerungsfunktionen zu überbrücken.

In vielen Fällen ist es wünschenswert, die elektrische Komponente sofort nach Anlegen der Betriebsspannung zu betätigen. Ein Beispiel hierfür ist die Ansteuerung einer Kraftstoffpumpe beim Motorstart. Wenn die Kraftstoffpumpe sofort aktiviert wird, so spart man die für die Initialisierung der digitalen Steuereinheit erforderliche Zeit, so dass der Motorstartvorgang beschleunigt werden kann. Daher ist in einer weiteren Ausführungsform vorgesehen, dass der Schaltungsblock derart ausgebildet ist, dass, wenn die Betriebsspannung den Schwellwert überschreitet, ein vordefiniertes Ansteuersignal für eine Dauer bereitgestellt wird, die mindestens so groß wie die Dauer der Initialisierungsphase ist.

In einer Ausführungsform ist die Stromversorgungseinrichtung des Kraftfahrzeugs von einer Starterbatterie des Kraftfahrzeugs oder mit einer damit verbundenen Motorstartschalteinrichtung, wie dem eingangs erwähnten Zündschloss, gebildet.

In einer konstruktiv besonders einfachen Ausführung stellt der Schaltungsblock das Ansteuersignal an einem Kanalanschluss (Source oder Drain) eines Feldeffekttransistors (FET) bereit, dessen Gatespannung durch das Ausgangssignal der digitalen Steuereinheit gesteuert wird. Am Gateanschluss eines FET kann ein Kondensator mit parallel geschalteter Entladepassage, insbesondere ein ohmscher Widerstand, zur Bereitstellung der Gatespannung während der vorbestimmten Zeitspanne vorgesehen sein. Durch die Wahl des elektrischen Widerstands der Entladepassage und die Dimensionierung des FET kann somit in einfacher Weise die Zeitspanne vorbestimmt werden (die Zeitspanne endet, wenn die über die Entladepassage abgebaute Kondensatorspannung unter die Schwellenspannung des FET sinkt). Es kann ein weiterer Transistor zum Aufladen dieses Kondensators aus der Betriebsspannung vorgesehen sein.

Einem Steueranschluss dieses weiteren Transistors kann das Ausgangssignal der digitalen Steuereinheit zugeführt werden. Wenn es sich bei dem weiteren Transistor um einen Bipolartransistor handelt, so kann ein weiterer Kondensator dazu vorgesehen sein, beim Anlegen der Betriebsspannung diesen weiteren Kondensator über dessen Steuerstrecke (z. B. Emitter-Basis-Strecke) aufzuladen und den Transistor somit für eine vorgegebene Zeit leitend zu machen, die zum Aufladen des erstgenannten Kondensators ausreicht. Dieser weitere Kondensator kann bei einem Absinken der Betriebsspannung unter den Schwellwert beispielsweise über eine Diode entladen werden, um auch bei einem wiederholten Startvorgang (Anstieg der Betriebsspannung über den Schwellwert) wieder die gleiche Funktion zu erfüllen.

### Kurzbeschreibung der Zeichnungen

- Fig. 1: ist ein Blockschaltbild einer erfindungsgemäßen Schaltungsanordnung gemäß einer ersten Ausführungsform,
- Fig. 2: ist eine Detaildarstellung der in Fig. 1 gezeigten Schaltungsanordnung zur Erläuterung der Funktion des Schaltungsblocks zur Bereitstellung eines Ansteuersignals,
- Fig. 3: ist eine Darstellung der zeitlichen Verläufe einiger Spannungen im Betrieb der Schaltungsanordnung gemäß Fig. 1 und 2 bei ordnungsgemäßer Funktion eines in der Schaltungsanordnung verwendeten Microcontrollers,
- Fig. 4: ist eine Darstellung der zeitlichen Verläufe einiger Spannungen ähnlich der Fig. 3, jedoch bei Vorliegen eines Fehlers im Microcontroller, und
- Fig. 5: ist eine der Fig. 2 entsprechende Darstellung einer zweiten (modifizierten) Ausführungsform.

### Beschreibung der bevorzugten Ausführungsformen

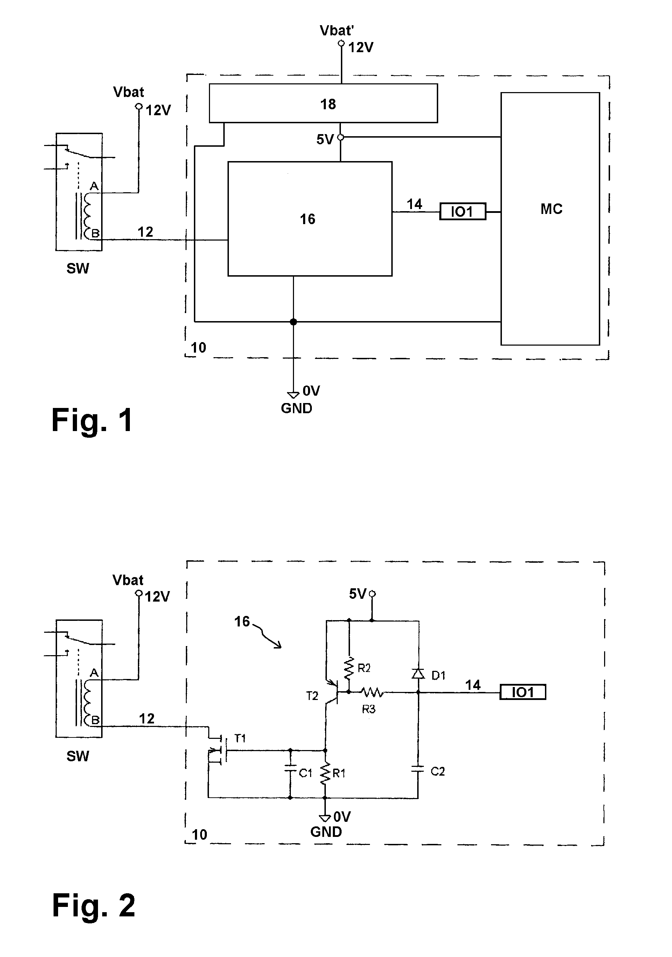

Fig. 1 ist ein Blockschaltbild einer Schaltungsanordnung 10 zur Steuerung eines steuerbaren Schalters SW, der im dargestellten Beispiel ein Relais für die Kraftstoffpumpe (nicht dargestellt) eines Kraftfahrzeugs ist. Dieser Komponente SW der Fahrzeugelektrik wird durch die Schaltungsanordnung 10 über eine Leitung 12 ein Ansteuersignal zugeführt.

Zur Definition dieses Ansteuersignals umfasst die Schaltungsanordnung 10 einen Microcontroller MC, welcher in seinem Betrieb an einem Ausgang IO1 ein Ausgangssignal bereitstellt und über eine Leitung 14 einem Schaltungsblock 16 eingibt, welcher an einem Ausgang das Ansteuersignal auf der Leitung 12 bereitstellt.

Eine Betriebsspannung von 12V wird der Schaltungsanordnung 10 über einen Versorgungsanschluss Vbat' dann zugeführt, wenn die Schaltungsanordnung in Betrieb genommen werden soll. Bei dieser Betriebsspannung handelt es sich um die Spannung einer (nicht dargestellten) Starterbatterie des Kraftfahrzeugs, die in an sich bekannter Weise über ein Zündschloss beim Einschalten der Zündung an den Versorgungsanschluss Vbat' geleitet wird. Unabhängig davon wird diese Batteriespannung von 12V über einen Anschluss Vbat direkt an einen Anschluss A des steuerbaren Schalters SW geführt, dessen zweiter Anschluss B über die Leitung 12 mit dem Ansteuersignal versorgt wird. Bei dem dargestellten Beispiel wird beim Motorstart eine Spannung von 0V über die Leitung 12 ausgegeben, so dass mittels des Schalters SW die Kraftstoffpumpe eingeschaltet wird.

Im dargestellten Beispiel wird der Microcontroller MC mit einer Spannung von 5V versorgt, welche an einem Ausgang eines Spannungsreglers 18 sowohl für den Microcontroller MC als auch den Schaltungsblock 16 bereitgestellt wird. Zu diesem Zweck ist der Spannungsregler 18 einerseits mit dem Versorgungsanschluss Vbat' und andererseits mit einem Masseanschluss GND verbunden.

Wenn am Versorgungsanschluss Vbat' eine über 6V (Schwellwert) liegende Betriebsspannung anliegt oder die anliegende Betriebsspannung über diesen Schwellwert ansteigt, so ist der Spannungsregler 18 in der Lage, die zum Betrieb des Microcontrollers erforderliche Spannung von 5V bereitzustellen, und der Microcontroller MC beginnt nach einer Initialisierungsphase (von z. B. 50ms) seinen Betrieb. Der Microcontroller MC stellt an seinem Ausgang IO1 dann ein Ausgangssignal bereit, welches den Schaltungsblock 16 veranlasst, ein diesem Ausgangssignal entsprechendes Ansteuersignal über die Leitung 12 auszugeben, um den Schalter SW einzuschalten. Solange der Microcontroller MC in Betrieb ist, stellt der Schaltungsblock 16 das Ansteuersignal basierend auf dem Ausgangssignal des Microcontrollers bereit.

Wenn jedoch die am Versorgungsanschluss Vbat' anliegende Spannung unter 6V absinkt, was insbesondere während eines Motorstarts passieren kann, so kann der Spannungsregler 18 an seinem Ausgang nicht mehr die zum Betrieb des Microcontrollers MC erforderliche Spannung von 5V bereitstellen und der Microcontroller MC geht in einen Resetmodus über, bei welchem, abhängig von der Bauart des Microcontrollers, das Ausgangssignal am Ausgang IO1 beispielsweise in einen hochohmigen Zustand übergeht, so dass in diesem Zustand das erforderliche Ansteuersignal nicht durch das Ausgangssignal des Microcontrollers definiert wird.

In einer solchen Phase einer zu geringen Betriebsspannung ("Unterspannung"), die in der Praxis durch den Vorgang des Einschaltens eines Verbrauchers mit momentan sehr großem Leistungsbedarf hervorgerufen werden kann und oftmals nur vorübergehend vorliegt, sorgt der Schaltungsblock 16 in der nachfolgend beschriebenen Weise für eine Aufrechterhaltung des zuletzt von dem Microcontroller MC definierten Ansteuersignals für eine vorbestimmte Zeitspanne. Diese Zeitspanne ist hierbei so bemessen, dass die Überbrückung dieses undefinierten Zustands wenigstens für eine Dauer erfolgt, welche gleich der Summe der in der Praxis zu erwartenden Dauer der Unterspannungsphase und der Dauer der Initialisierungsphase des Microcontrollers ist.

Durch eine geeignete Auslegung des Schaltungsblocks 16 können hierbei folgende vorteilhafte Maßnahmen, einzeln oder kombiniert, realisiert werden:
a) Die vorbestimmte Zeitspanne sollte die typische Unterspannungsdauer zuzüglich Initialisierungsdauer nicht wesentlich überschreiten, insbesondere kleiner als das zweifache dieser Summe sein, da sonst eine unerwünschte Verzögerung beim Ausschalten der Betriebsspannung am Versorgungsanschluss Vbat' (Motorstop) auftritt. Ein solches selbstständiges Abschalten der Überbrückung ist darüber hinaus vorteilhaft für den Fall, dass der verwendete Microcontroller, beispielsweise wegen ei nes Softwarefehlers, nicht aus einem Resetzustand in einen normalen Betriebszustand zurückkommt. Bei dem dargestellten Ausführungsbeispiel wird damit ein unkontrolliertes Weiterbetreiben der Kraftstoffpumpe in diesem Fehlerfall vermieden.
b) Der Schaltungsblock 16 sollte auch noch mit einer sehr kleinen Versorgungsspannung oder ganz unabhängig von der der Schaltungsanordnung 10 zugeführten Betriebsspannung zumindest für die Dauer der Überbrückung funktionieren, was in einfacher Weise durch Anordnung eines Energiespeichers im Schaltungsblock 16 zu erreichen ist, der z. B. während des normalen Betriebs aufgeladen werden kann.
c) In manchen Fällen, beispielsweise wenn, wie bei dem dargestellten Ausführungsbeispiel, die angesteuerte Komponente das Kraftstoffpumpenrelais einer Brennkraftmaschine ist, ist es vorteilhaft, wenn der Schaltungsblock 16 diese Komponente sofort nach Anlegen der Betriebsspannung betätigt, also ein vordefiniertes Ansteuersignal für eine gewisse Dauer bereitstellt, die mindestens so groß ist wie die Dauer der Initialisierungsphase des verwendeten Microcontrollers. Dadurch spart man die für die Initialisierung des Microcontrollers erforderliche Zeit. Bei dem dargestellten Ausführungsbeispiel bedeutet dies, dass beim Einschalten der Schaltungsanordnung 10 sofort eine Spannung von 0V an der Leitung 12 ausgegeben wird, um den Schalter SW einzuschalten.
d) Der Schaltungsblock 16 sollte so ausgelegt sein, dass dieser auch bei wiederholtem Motorstartvorgang jedesmal wieder die gleiche Überbrückungsfunktion erfüllt.

Fig. 2 zeigt nochmals die mit Bezug auf Fig. 1 bereits beschriebene Schaltungsanordnung 10, wobei der Aufbau des Schaltungsblocks 16 detailliert dargestellt ist, wohingegen andere (zum Verständnis der Funktion des Schaltungsblocks 16 nicht wesentliche) Schaltungsteile weggelassen sind. Diese weggelassenen Schaltungsteile sind in diesem Beispiel aus Fig. 1 ersichtlich.

Der Schaltungsblock 16 ist wie folgt aufgebaut. Ein 5V-Versorgungsanschluss (=Ausgang des Spannungsreglers 18) ist mit dem Emitter eines Bipolartransistors T2 (pnp), einem ersten Anschluss eines Widerstands R2 und der Kathode einer Diode D1 verbunden. Ein zweiter Anschluss des Widerstands R2 ist über einen Widerstand R3 mit der Anode der Diode D1 verbunden. Diese Anode ist ferner mit dem Ausgang IO1 des Microcontrollers MC und einem ersten Anschluss eines Kondensators C2 verbunden. Der zweite Anschluss dieses Kondensators C2 ist mit dem Masseanschluss GND (0V) verbunden. Der Kollektor des Transistors T2 ist mit dem Gate eines MOS-FET T1, einem ersten Anschluss eines Kondensators C1 und einem ersten Anschluss eines Widerstands R1 verbunden. Die Source von T1, der zweite Anschluss von C1 und der zweite Anschluss von R1 sind ebenfalls mit dem Masseanschluss GND verbunden. Das Drain von T1 ist mit der Leitung 12 verbunden.

Die Schaltungsanordnung 10 funktioniert wie nachfolgend beschrieben. Beim Einschalten der Zündung wird die Schaltungsanordnung 10 über den Versorgungsanschluss Vbat' (Zündschlosskontakt) mit der Batteriespannung von 12V versorgt. Die Ausgangsspannung des Spannungsreglers 18 steigt schnell von 0V auf 5V an. Diese 5V-Betriebsspannung wird sowohl dem Microcontroller MC als auch dem Schaltungsblock 16 zugeführt. Der Microcontroller MC bleibt anfangs, nämlich während der Dauer seiner Initialisierungsphase, noch in einem Resetzustand, in welchem das Ausgangssignal am Ausgang IO1 undefiniert ist. Im dargestellten Ausführungsbeispiel stellt der Microcontroller MC ein so genanntes Tri-State-Ausgangssignal bereit (0V, 5V, hochohmig). Der Kondensator C2 ist zu diesem Zeitpunkt entladen und wird über R3 und die Parallelschaltung von R2 und die Basis-Emitter-Diode von T2 langsam auf 5V aufgeladen. T2, R2 und R3 können abweichend vom dargestellen Ausführungsbeispiel auch in einem einzigen Bauteil vereinigt sein ("Logik-Transistor"). Der in die Basis von T2 fließende Anteil dieses Stromes schaltet T2 für eine bestimmte Zeit ein, so dass während dieser Zeit auch ein Strom über den Kollektor von T2 fließt und den Kondensator C1 von 0V auf 5V auflädt. Wenn diese Spannung am Kondensator C1 die Schwellenspannung von T1 überschreitet, so schaltet T1 ein. Bei dem dargestellten Ausführungsbeispiel ist T1 ein MOS-FET mit einer Schwellenspannung von etwa 2,5V. Der Schalter SW schaltet somit die Kraftstoffpumpe an.

Der Normalbetrieb der Schaltungsanordnung 10 beginnt, wenn der Microcontroller MC seine Initialisierungsphase beendet und über seinen Ausgang IO1 den Spannungspegel am Kondensator C2 auf 0V ansteuert. Dadurch bleibt T2 eingeschaltet. Die Spannung an C1 bleibt auf 5V und auch T1 bleibt eingeschaltet. Somit bleibt auch der Kraftstoffpumpenschalter SW eingeschaltet. In diesem Zustand definiert das Ausgangssignal des Microcontrollers MC das Ansteuersignal für den Schalter SW.

Wenn die Zündung wieder ausgeschaltet wird, d. h. keine Betriebsspannung mehr zu dem Versorgungsanschluss Vbat' geführt wird, so bricht auch die Spannung am Ausgang des Spannungsreglers 18 zusammen und der Microcontroller MC geht in seinen Resetzustand, in welchem der Ausgang IO1 hochohmig wird. Sodann wird C2 über R2 und R3 aufgeladen, woraufhin T2 nach einer kurzen Verzögerung sperrt. C1 wird über R1 langsam entla den, bis die Gatespannung T1 unter die Schwellenspannung sinkt und T1 somit sperrt. Der Kraftstoffpumpenschalter SW schaltet aus. Um sicherzustellen, dass T2 beim nächsten Einschalten der Zündung wieder eingeschaltet werden kann, wird C2 über die Diode D1 entladen. Dies stellt die Anfangsbedingung wieder her. Eine etwaige geringe Restspannung an C1 ist dabei ohne Belang.

Wie es oben beschrieben wurde, wird T2 beim Einschalten der Zündung nur für eine kurze Zeit leitend, um den Kondensator C1 bei diesem Einschaltvorgang aufzuladen. Dann schaltet T2 jedoch wieder aus. In diesem Moment beginnt eine langsame Entladung von C1 über den Widerstand R1, so dass die Spannung am Gate von T1 langsam sinkt. Die Schwellenspannung von T1 würde nach etwa 200ms unterschritten und der Transistor T1 somit ausgeschaltet werden. Im Normalfall beendet der Microcontroller MC jedoch seine Initialisierung innerhalb einer Zeit von etwa 50ms und übernimmt rechtzeitig vor Unterschreiten der Schwellenspannung an T1 die Ansteuerung über seinen Ausgang IO1 und die Leitung 14. Falls jedoch, beispielsweise bei einem Motorstart bei tiefer Temperatur, die Batteriespannung auf 3V sinkt, so wird für den Microcontroller MC ein Reset ausgelöst. Der Resetzustand bleibt solange erhalten, bis die über Versorgungsanschluss Vbat' zugeführte Batteriespannung wieder 6V erreicht hat und am Ausgang des Spannungsreglers 18 die zum Betrieb des Microcontrollers MC erforderlichen 5V bereitgesetellt werden können. Während dieser Dauer bleibt T1, getrieben durch die Spannung an C1, jedoch eingeschaltet. Die Unterspannungsphase wird also durch den Schaltungsblock 16 überbrückt, so dass der Kraftstoffpumpenschalter SW eingeschaltet bleibt. Wenn der Microcontroller MC rechtzeitig nach Beendigung der Unterspannungsphase wieder seinen Betrieb aufnimmt, so wird er seinen Ausgang IO1 auf 0V steuern, so dass T1 weiter eingeschaltet bleibt.

Mit anderen Worten werden zusätzliche Ansteuersignale erzeugt, die für eine vorbestimmte Zeitdauer das von einer digitalen Steuereinheit erzeugte Steuersignal aufrechterhalten falls die digitale Steuereinheit wegen einer zu geringen Betriebsspannung ausfällt (Resetzustand). Diese "Hilfssignale" halten das zuletzt von der digitalen Steuereinheit vorgegebene Ansteuersignal aufrecht, solange diese Steuereinheit im Resetzustand ist. Die Hilfssignale gehen wieder in einen "Ruhezustand", wenn die Steuereinheit länger als eine vorgegebene Zeitdauer im Resetzustand verbleibt.

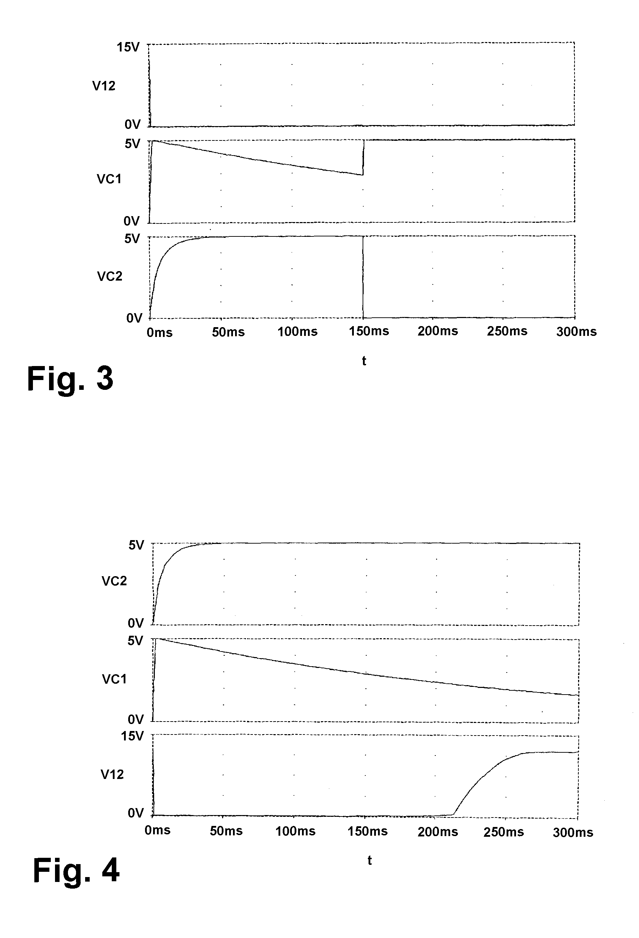

Fig. 3 veranschaulicht das Verhalten der Schaltungsanordnung 10 für eine Unterspannungsdauer von 100ms (zwischen etwa 0s und 100ms) bei rechtzeitiger Übernahme der Steuerung durch den Microcontroller (zum Zeitpunkt 150ms). Fig. 3 oben zeigt den Verlauf der Spannung V12 auf der Leitung 12. Diese Spannung sinkt beim Einschalten der Zündung sehr rasch von 12V auf 0V ab (Einschalten der Kraftstoffpumpe). Fig. 3 mitte zeigt den Verlauf der Spannung VC1 am Gate von T1 (=Spannung am Kondensator C1). Diese Spannung steigt beim Einschalten der Zündung rasch von 0V auf 5V und sinkt dann langsam. Dieses Absinken erfolgt bis zu einem Zeitpunkt bei etwa 150ms. Zu diesem Zeitpunkt übernimmt der Microcontroller MC die Steuerung. Das Einschalten des Transistors T2 führt dazu, dass die Spannung VC1 dann wieder rasch auf 5V ansteigt. Fig. 3 unten zeigt den Verlauf der Spannung VC2 am Kondensator C2. Diese Spannung VC2 steigt beim Einschalten der Zündung an, so dass C2 nach 50ms praktisch vollständig aufgeladen ist. Wesentlich ist, dass zu diesem Zeitpunkt der Aufladevorgang für den Kondensator C1 bereits abgeschlossen wurde. Wenn der Mic rocontroller MC bei etwa 150ms die Steuerung wieder übernimmt, so sinkt die Spannung VC2 rasch wieder auf 0V. Dies ist die dann vom Microcontroller MC bereitgestellte Ausgangsspannung am Ausgang IO1.

Fig. 4 veranschaulicht das Verhalten der Schaltungsanordnung 10 im Falle eines Fehlers im Microcontroller MC, der dazu führt, dass der Microcontroller seinen Resetzustand nicht rechtzeitig beendet. Fig. 4 oben zeigt wieder die Spannung VC2 am Kondensator C2, die in diesem Fall auch über den Zeitpunkt von 150ms hinaus bei 5V verbleibt, da der Microcontroller MC diese Spannung zu diesem Zeitpunkt nicht vorgibt. Fig. 4 mitte zeigt wieder die Spannung VC1 am Kondensator C1, die über den Zeitpunkt von 150ms hinaus weiter absinkt und schließlich zu einem Zeitpunkt von etwa 200ms die Schwellenspannung von C1 unterschreitet. Fig. 4 unten zeigt wieder die Spannung V12 auf der Leitung 12, die in diesem Fall dementsprechend bei etwa 200ms wieder langsam auf 12V ansteigt, weil das Unterschreiten der Schwellenspannung von T1 zum Ausschalten dieses Transistors führt. Durch dieses Ausschalten von T1 wird ein unkontrollierter Weiterbetrieb der Kraftstoffpumpe verhindert.

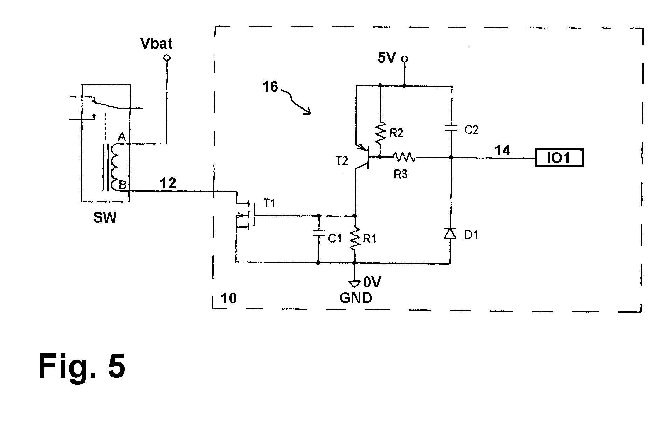

Fig. 5 zeigt eine alternative Ausführung der Schaltungsanordnung 10. Diese zweite Ausführungsform ist zur Ansteuerung von elektrischen Komponenten vorgesehen, welche beim Einschalten der Zündung nicht sofort durch ein vordefiniertes Ansteuersignal sondern erst durch das vom Microcontroller vorgegebene Ausgangssignal angesteuert werden sollen.

Wie es aus Fig. 5 ersichtlich ist, sind die Positionen von C2 und D1 vertauscht. C2 ist nicht mit dem Masseanschluss GND sondern mit dem Versorgungsanschluss (5V) verbunden. Beim Einschalten der Zündung und somit der 5V-Versorgung wird C2 nicht aufgeladen, sondern bleibt entladen. Folglich fließt zu diesem Zeitpunkt auch kein Strom über die Emitter-Basis-Strecke von T2 und T2 bleibt gesperrt. Dementsprechend wird auch T1 nicht aufgeladen und T1 schaltet nicht ein.

Erst wenn der Microcontroller MC nach Beendigung seiner Initialisierungsphase über seinen Ausgang IO1 die Leitung 14 auf einen Pegel 0V steuert, wird T2 und damit auch T1 eingeschaltet und der Schalter SW betätigt.

Auch bei diesem Ausführungsbeispiel bleibt die vorteilhafte Eigenschaft der Überbrückung einer Unterspannungsphase erhalten. Falls durch eine Unterspannung des Bordnetzes ein Reset für den Microcontroller MC ausgelöst wird, so überbrückt der Schaltungsblock 16 wieder diesen Zustand. Das zuletzt vom Microcontroller MC vorgegebene Ausgangssignal wird für eine Zeitdauer aufrechterhalten, die durch C1, R1 und die Schwellenspannung von T1 definiert ist.

Selbstverständlich sind die beschriebenen Ausführungsbeispiele nicht einschränkend zu verstehen. Vielmehr sind für Fachleute zahlreiche Modifikationen ersichtlich, die an diesen Ausführungsbeispielen vorgenommen werden können, ohne den Rahmen der Erfindung zu verlassen. Beispielsweise ist es nicht zwingend, dass ein Spannungswandler als Teil der beschriebenen Schaltungsanordnung vorgesehen ist. Vielmehr könnte ein derartiger Spannungswandler auch an einer anderen Stelle der Fahrzeugelektronik vorgesehen sein. Auch könnte der Schaltungsblock und/oder der Microcontroller direkt mit der Bordspannung betrieben sein. Der Microcontroller kann eine Vielzahl von Steuerausgängen und auch eine Vielzahl von Eingängen, insbesondere zur Erfassung von Sensorsignalen, aufweisen. Wenngleich bei den beschriebenen Ausführungsbeispielen nur ein Steuerausgang (IO1) vorhanden ist und diesem zugeordnet nur ein Schaltungsblock 16 vorhanden ist, so könnte in einer Alternative vorgesehen sein, dass mehrere Steuerausgänge einer Mehrzahl von Steuerausgängen jeweils mit einem Schaltungsblock zur Aufrechterhaltung des betreffenden Ausgangssignals während einer Unterspannungsphase versehen sind.

## Patentansprüche

1. Schaltungsanordnung zur Steuerung wenigstens einer elektrischen Komponente eines Kraftfahrzeugs mittels eines dieser Komponente zugeführten Ansteuersignals,
wobei die Schaltungsanordnung eine digitale Steuereinheit umfasst, welche in ihrem Betrieb an einem Ausgang der digitalen Steuereinheit ein Ausgangssignal zur Vorgabe des Ansteuersignals bereitstellt,
wobei die Schaltungsanordnung einen Versorgungsanschluss zum Anlegen einer Betriebsspannung aufweist, die von einer Stromversorgungseinrichtung des Kraftfahrzeugs bereitgestellt wird,
wobei die digitale Steuereinheit derart ausgebildet ist, dass diese ihren Betrieb beginnt, wenn am Versorgungsanschluss eine über einem vorbestimmten Schwellwert liegende Betriebsspannung anliegt, und ihren Betrieb beendet, wenn am Versorgungsanschluss eine unter dem Schwellwert liegende Betriebsspannung anliegt,
wobei die Schaltungsanordnung einen mit dem Ausgang der digitalen Steuereinheit verbundenen Schaltungsblock zur Bereitstellung des Ansteuersignals umfasst,
wobei der Schaltungsblock derart ausgebildet ist, dass dieser im Betrieb der digitalen Steuereinheit das Ansteuersignal basierend auf dem Ausgangssignal der digitalen Steuereinheit bereitstellt und bei Beendigung des Betriebs der digitalen Steuereinheit das momentane An steuersignal für eine vorbestimmte Zeitspanne aufrecht erhält.

2. Schaltungsanordnung nach Anspruch 1, wobei als die elektrische Komponente ein Relais oder ein Magnetaktuator des Kraftfahrzeugs vorgesehen ist.

3. Schaltungsanordnung nach Anspruch 1, wobei als das Ansteuersignal ein binäres Signal zum Einschalten und Ausschalten der elektrischen Komponente vorgesehen ist.

4. Schaltungsanordnung nach Anspruch 1, wobei die digitale Steuereinheit programmgesteuert funktioniert.

5. Schaltungsanordnung nach Anspruch 1, wobei die digitale Steuereinheit derart ausgebildet ist, dass diese ihren Betrieb erst am Ende einer Initialisierungsphase beginnt, und wobei die Dauer der vorbestimmten Zeitspanne größer als die Dauer der Initialisierungsphase vorgesehen ist.

6. Schaltungsanordnung nach Anspruch 5, wobei der Schaltungsblock derart ausgebildet ist, dass, wenn die Betriebsspannung den Schwellwert überschreitet, ein vordefiniertes Ansteuersignal für eine Dauer bereitgestellt wird, die mindestens so groß wie die Dauer der Initialisierungsphase ist.

7. Schaltungsanordnung nach Anspruch 1, wobei die Stromversorgungseinrichtung von einer Starterbatterie des Kraftfahrzeugs oder von einer damit verbundenen Motorstartschalteinrichtung gebildet ist.

8. Schaltungsanordnung nach Anspruch 1, wobei der Schaltungsblock das Ansteuersignal an einem Kanalanschluss eines FET bereitstellt, dessen Gatespannung durch das Ausgangsignal der digitalen Steuereinheit gesteuert wird.

9. Schaltungsanordnung nach Anspruch 8, wobei am Gateanschluss des FET ein Kondensator mit parallel geschalteter Entladepassage zur Bereitstellung der Gatespannung während der vorbestimmten Zeitspanne vorgesehen ist.

10. Verfahren zur Steuerung wenigstens einer elektrischen Komponente eines Kraftfahrzeugs mittels eines dieser Komponente zugeführten Ansteuersignals, umfassend:
- Betrieb einer digitalen Steuereinheit zur Vorgabe des Ansteuersignals durch ein Ausgangssignal der digitalen Steuereinheit, welche ihren Betrieb beginnt, wenn von einer Stromversorgungseinrichtung des Kraftfahrzeugs eine über einem vorbestimmten Schwellwert liegende Betriebsspannung bereitgestellt wird, und ihren Betrieb beendet, wenn eine unter dem Schwellwert liegende Betriebsspannung bereitgestellt wird,
- Eingabe des Ausgangssignals zu einem Schaltungsblock, und
- Bereitstellung des Ansteuersignals mittels des Schaltungsblocks, welcher im Betrieb der digitalen Steuereinheit das Ansteuersignal basierend auf dem Ausgangssignal der digitalen Steuereinheit bereitstellt und bei Beendigung des Betriebs der digitalen Steuereinheit das momen tane Ansteuersignal für eine vorbestimmte Zeitspanne aufrechterhält.
